# EUROPÄISCHE PATENTSCHRIFT

(11) **EP 0 725 242 B1**
(45) Veröffentlichungstag und Bekanntmachung des Hinweises auf die Patenterteilung: **03.05.2000**
(21) Anmeldenummer: 95115921.9
(22) Anmeldetag: 10.10.1995
(51) Int. Cl.: F16J 15/32, G01P 3/487, G01P 3/44

(54) **Dichtungsanordnung**
Sealing arrangement
Dispositif d'étanchéité

(30) Priorität: 03.02.1995 DE 19503468
(43) Veröffentlichungstag der Anmeldung: 07.08.1996
(73) Patentinhaber: Firma Carl Freudenberg, 69469 Weinheim (DE)
(72) Erfinder: Burger, Stefan, D-69469 Weinheim (DE); Eckel, Hans-Gerd, Dr., D-69515 Laudenbach (DE); Kober, Horst, D-69469 Weinheim (DE); Lannert, Berthold, D-64658 Fürth (DE)

(56) Entgegenhaltungen:
- EP-A- 0 375 019
- EP-A- 0 557 932
- EP-A- 0 647 851
- FR-A- 2 574 501
- US-A- 4 304 412

## Beschreibung

Die Erfindung betrifft eine Dichtungsanordnung, umfassend einen Dichtring mit einem sich im wesentlichen in radialer Richtung erstreckenden Stützring, einem ersten und zweiten Dichtteil sowie einem Multipolring, wobei der Stützring in radialer Richtung einerseits mit dem ersten Dichtteil verbunden ist, der relativ drehfest, statisch dichtend ein erstes Maschinenteil anliegend berührt und in radialer Richtung andererseits mit dem zweiten Dichtteil verbunden ist, der relativ drehbeweglich, dynamisch abdichtend an ein zweites Maschinenteil angelegt ist, wobei der erste und der zweite Dichtteil jeweils aus einem elastomeren Werkstoff bestehen, wobei der Dichtring zur Erfassung von Drehbewegungen des ersten Maschinenteils um seine Achse zumindest ein Hilfsmittel aufweist, das an einem Drehzahlsensor vorbeibeweglich ist, wobei das Hilfsmittel durch den mit dem ersten Maschinenteil gemeinsam um seine Achse drehbaren Multipolring gebildet ist, der aus einem magnetisierbaren Elastomerwerkstoff besteht und in Umfangsrichtung aufeinanderfolgende, sich in radialer Richtung erstreckende Nord- und Südpole aufweist, wobei der erste Dichtteil in einer in Richtung des zweiten Maschinenteils geöffneten Nut des ersten Maschinenteils dichtend abgestützt ist und wobei das erste Maschinenteil aus einem metallischen Werkstoff besteht.

Eine solche Dichtungsanordnung ist aus der FR-PS 25 74 501 bekannt. Die Dichtungsanordnung ist zum Abdichten von Wälzlagern vorgesehen und besteht aus einem Stützring aus metallischem Werkstoff, der in radialer Richtung und auf der den Wälzkörpern zugewandten Stirnseite vom elastomeren Werkstoff des Dichtrings umschlossen ist. Der erste und der zweite Dichtteil sind einstückig ineinander übergehend ausgebildet, wobei der Stützkörper auf der dem Drehzahlsensor zugewandten Seite mit einem Multipolring verbunden ist, der den Stützring entlang seiner gesamten radialen Erstreckung anliegend berührt und entsprechend dem Stützring ausgebildet ist. Der Multipolring besteht aus Ferritanteilen, die durch einen Kautschuk- oder Plastikbinder verbunden sind.

Der erste Dichtteil ist innerhalb der in Richtung des zweiten Maschinenteils geöffneten Nut des ersten Maschinenteils unter radialer Vorspannung dichtend angeordnet. Im Laufe der Gebrauchsdauer treten bei der vorbekannten Dichtungsanordnung Relaxationen des ersten Dichtteils auf, die zu einer Verringerung der elastischen Vorspannung am ersten Maschinenteil führen. Undichtigkeiten in diesem Bereich sind dadurch die Folge.

Aus der EP 0 375 019 A1 ist eine Dichtungsanordnung bekannt, wobei der Dichtring zur Erfassung von Drehbewegungen um seine Achse einen Multipolring aufweist, der an einem Drehzahlsensor vorbei beweglich ist. Der Multipolring ist separat vom Dichtteil, das aus einem elastomeren Werkstoff besteht, erzeugt.

Weitere Dichtungsanordnungen gelangen beispielsweise zur Abdichtung von Radlagern in Kraftfahrzeugen zur Anwendung. Ist das Kraftfahrzeug mit einer ABS-Bremsanlage ausgestattet, umfaßt die Dichtungsanordnung einen induktiven Geber zur Erfassung der Drehzahl des Fahrzeugrades, wobei der Geber, der mit dem Fahrzeugrad umläuft und zumeist aus einer Scheibe aus metallischem Werkstoff besteht, mit in Umfangsrichtung gleichmäßig verteilten Oberflächendiskontinuitäten an dem Drehzahlsensor vorbeibewegbar ist. Die Oberflächendiskontinuitäten können beispielsweise durch in Umfangsrichtung verteilte Ausnehmungen oder Einprägungen gebildet sein. Dabei ist allerdings zu beachten, daß die Herstellung derartiger Dichtungsanordnungen aufwendig und in wirtschaftlicher Hinsicht wenig zufriedenstellend ist. Außerdem weist der mit einem metallischen Sensorring versehene Dichtring eine vergleichsweise große Masse auf. Bei Beaufschlagung der Oberflächendiskontinuitäten mit Verunreinigungen, wie beispielsweise Spritzwasser, Staub und/oder Schlamm kann es zu Übermittlungsfehlern an den Drehzahlsensor kommen, wodurch eine zuverlässige Drehzahl-Ermittlung beeinträchtigt wird.

Der Erfindung liegt die Aufgabe zugrunde, die obengenannten Nachteile zu vermeiden und eine Dichtungsanordnung zu zeigen, die einfach und kostengünstig herstellbar ist, einen verbesserten Haftsitz am ersten Maschinenteil durch eine erhöhte Haftfestigkeit aufweist und bei der die statische Abdichtung gegenüber dem ersten Maschinenteil verbessert ist.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist es vorgesehen, daß der erste Dichtteil und der Multipolring materialeinheitlich und einstückig ineinander übergehend ausgebildet sind, so daß durch den ersten Dichtteil aus magnetisiertem Elastomerwerkstoff der Haftsitz am ersten Maschinenteil durch eine erhöhte Haftfestigkeit und folglich die statische Abdichtung gegenüber dem ersten Maschinenteil verbessert ist. Ein derart ausgebildeter Dichtring ist in fertigungstechnischer Hinsicht einfach und kostengünstig herstellbar, weist ein geringes Gewicht auf und ermöglicht eine gleichbleibend gute Impulsübertragung an den Drehzahlsensor während einer langen Gebrauchsdauer. Der magnetisierte Elastomerwerkstoff bewegt sich gemeinsam mit dem ersten Maschinenteil um dessen Achse und relativ zum ortsfesten Drehzahlsensor, wobei sich die Nord- und die Südpole des Multipolrings zur induktiven Erfassung der Drehbewegung abwechselnd an dem relativ ortsfesten Drehzahlsensor vorbeibewegen.

Der erste Dichtteil und der Multipolring sind materialeinheitlich und einstückig ineinander übergehend ausgebildet. Hierbei ist von Vorteil, daß zusätzlich zu dem Multipolring auch der erste Dichtteil aus einem magnetisierten Elastomerwerkstoff besteht und dadurch der Haftsitz am ersten Maschinenteil durch eine erhöhte Haftfestigkeit verbessert und die statische Abdichtung gegenüber dem ersten Maschinenteil folglich ebenfalls verbessert wird. Außerdem ist die Herstellung des Dichtrings durch eine derartige Ausgestaltung weiter vereinfacht, da höchstens zwei unterschiedliche Elastomerwerkstoffe mit voneinander abweichenden Gebrauchseigenschaften zur Anwendung gelangen. Zur Verbesserung des Haftsitzes des ersten Dichtteils am ersten Maschinenteil ist es erforderlich, daß das erste Maschinenteil aus einem metallischen Werkstoff besteht, beispielsweise aus der äußeren Lagerschale eines Wälzlagers.

Der erste Dichtteil, der Multipolring und der zweite Dichtteil sind bevorzugt mit dem Stützring adhäsiv verbunden, wobei der Multipolring auf der dem Drehzahlsensor zugewandten Seite des Stützrings angeordnet ist. Da der erste Dichtteil, der Multipolring und der zweite Dichtteil aus elastomerem Werkstoff bestehen, können diese in einem Arbeitsgang mit dem Stützring vulkanisiert werden. Hinsichtlich einer kostengünstigen Herstellbarkeit besteht der Stützring bevorzugt aus einem tiefgezogenen Blechteil.

Der erste Dichtteil und der Multipolring können bevorzugt ohne sprunghafte Querschnittsveränderungen ineinander übergehend ausgebildet sein und eine im wesentlichen übereinstimmenden Materialstärke aufweisen. In fertigungstechnischer Hinsicht unerwünschte Materialanhäufungen, die während des Vulkanisationsprozesses unterschiedlich große Schrumpfspannungen bewirken können, werden durch eine derartige Ausgestaltung zuverlässig verhindert. Die problemlose Herstellung des Dichtrings ist durch eine derartige Ausgestaltung vereinfacht.

Der Stützring, der erste und der zweite Maschinenteil bestehen jeweils aus einem metallischen Werkstoff, wobei der erste und der zweite Maschinenteil beispielsweise durch den Außen- und den Innenring eines Wälzlagers gebildet sind und der Stützring aus einem tiefziehbaren metallischen Werkstoff besteht. Im Bereich der statischen Abdichtung zwischen dem ersten Maschinenteil und dem ersten Dichtteil ist von Vorteil, daß zusätzlich zu der Anordnung des ersten Dichtteils unter radialer Vorspannung an der Oberfläche des ersten Maschinenteils der magnetisierte Elastomerwerkstoff des ersten Dichtteils unter radialer Vorspannung an der Oberfläche des ersten Maschinenteils der magnetisierte Elastomerwerkstoff des ersten Dichtteils eine verbesserte Haftfestigkeit und dadurch eine verbesserte Abdichtung in diesem Bereich bedingt.

Der erste Dichtteil kann in einer in Richtung des zweiten Maschinenteils geöffneten Nut des ersten Maschinenteils dichtend abgestützt sein. Bei einer derartigen Anordnung ist von Vorteil, daß der erste Dichtteil einerseits vor unerwünschten äußeren Einflüssen geschützt ist, beispielsweise vor Beaufschlagung mit Verunreinigungen und die einschnappbare Verbindung des ersten Dichtteils in die Nut eine Hilfe für die Positionierung des Dichtrings zwischen den beiden Maschinenteilen ist.

Der zweite Dichtteil kann das zweite Maschinenteil mit zumindest zwei Dichtlippen anliegend berühren, wobei die Dichtlippen einander mit axialem Abstand benachbart zugeordnet sind und wobei der durch die Dichtlippen und das zweite Maschinenteil begrenzte, ringförmige Hohlraum mit einem Sperrfett befüllbar ist. Dadurch, daß der Hohlraum mit dem Sperrfett befüllt ist, ist die dynamische Abdichtung zwischen den Dichtlippen und dem relativ drehbeweglichen zweiten Maschinenteil verbessert. Insbesondere, wenn die Dichtungsanordnung einer starken Beaufschlagung mit Verunreinigungen ausgesetzt ist, hat sich eine solche Ausgestaltung als vorteilhaft bewährt. Die Verunreinigungen werden einerseits größtenteils durch die von dem abzudichtenden Raum abgewandte Dichtlippe ferngehalten. Andererseits erreichen die Verunreinigungen, die die von dem abzudichtenden Raum abgewandte Dichtlippe passiert haben, durch das Sperrfett die dem abzudichtenden Raum zugewandte Dichtlippe nicht. Der abrasive Verschleiß, der dem abzudichtenden Raum zugewandten Dichtlippe, ist durch den mit Sperrfett gefüllten Hohlraum während einer langen Gebrauchsdauer des Dichtrings nur vernachlässigbar gering. Der Dichtring bewirkt eine ausgezeichnete Abdichtung während einer sehr langen Gebrauchsdauer.

Der erste Dichtteil, der Multipolring und der zweite Dichtteil können den Stützring auf der dem abzudichtenden Raum abgewandten Seite vollständig überdecken. Ein Stützring, der aus einem tiefgezogenen Blechteil besteht, ist dadurch sicher vor Korrosion geschützt.

Die beschriebene Dichtungsanordnung kann bevorzugt zur Abdichtung eines Wälzlagers in der Radnabe eines Kraftfahrzeugs und zur Erfassung von Drehbewegungen des Fahrzeugrads verwendet werden, wobei der Außenring des Wälzlagers das erste Maschinenteil und der Innenring des Wälzlagers das zweite Maschinenteil bilden. Der Innenring des Wälzlagers ist dabei relativ drehfest mit der Achse verbunden, wobei der Außenring bei Bewegung des Fahrzeugs mit dem Dichtring und dem Fahrzeugrad mit gleicher Drehgeschwindigkeit um die Achse und den zweiten Maschinenteil rotieren. Der Drehzahlsensor ist bezogen auf den als zweiten Maschinenteil ausgebildeten Innenring des Wälzlagers relativ unbeweglich angeordnet.

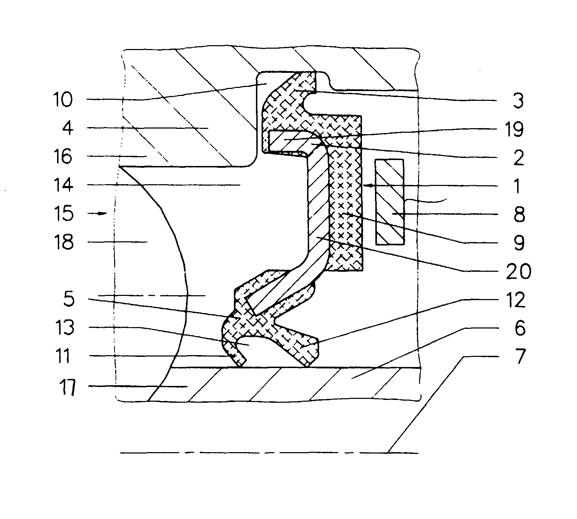

Ein Ausführungsbeispiel der erfindungsgemäßen Dichtungsanordnung wird nachfolgend anhand der Zeichnung näher erläutert. In der Zeichnung sind die zu berücksichtigenden Einzelkomponenten der Dichtungsanordnung in schematischer Darstellung gezeigt.

In der Zeichnung ist eine Dichtungsanordnung gezeigt, die im wesentlichen aus einem Dichtring 1 besteht, der in radialer Richtung zwischen einem ersten und einem zweiten Maschinenteil 4, 6 angeordnet ist. In diesem Ausführungsbeispiel bildet die Dichtungsanordnung einen Bestandteil einer Radaufhängung eines Kraftfahrzeugs, wobei der erste und der zweite Maschinenteil 4, 6 Bestandteile eines Radlagers bilden, das als Wälzlager 15 ausgeführt ist. Das Wälzlager 15 besteht aus einem Außenring 16 und einem Innenring 17, die durch in Umfangsrichtung verteilte Wälzkörper 18 relativ drehbeweglich aufeinander abgestützt sind. Der Dichtring 1, der relativ drehfest mit dem Außenring 16 des Wälzlagers 15 verbunden ist, besteht zur statischen Abdichtung gegenüber dem Außenring 16 aus einem ersten Dichtteil 3 und zur dynamischen Abdichtung gegenüber dem relativ beweglichen Innenring mit einem zweiten Dichtteil 5, wobei der zweite Dichtteil 5 mit zwei in axialer Richtung zueinander benachbarten Dichtlippen 11, 12 auf dem Innenring 17 abgestützt ist.

Zur Erfassung der Drehbewegung des drehfest mit dem hier nicht dargestellten Fahrzeugrad verbundenen Außenrings 16 ist ein Multipolring 9 vorgesehen, der auf der dem Drehzahlsensor 8 zugewandten Seite des Stützrings 2 des Dichtrings 1 angeordnet ist. Der Multipolring 9 besteht aus einem magnetisierten Elastomerwerkstoff und weist in Umfangsrichtung aufeinanderfolgende, sich in radialer Richtung erstreckende Nord- und Südpole auf, die sich bei Drehbewegung des Fahrzeugrads abwechselnd am Drehzahlsensor vorbeibewegen.

Der Multipolring 9 und der erste Dichtteil 3 sind in diesem Ausführungsbeispiel materialeinheitlich und einstückig ineinander übergehend ausgebildet, so daß auch der erste Dichtteil 3 aus dem selben magnetisierten Elastomerwerkstoff besteht, wie der Multipolring 9. Der Außenring 16 ist in diesem Ausführungsbeispiel mit einer innenumfangsseitig umlaufenden, in Richtung des Innenrings 17 geöffneten Nut 10 versehen, deren Ausdehnung in axialer Richtung im wesentlichen den Abmessungen des ersten Dichtteils 3 in gleicher Richtung entspricht.

Der Stützring 2 weist einen im wesentlichen L-förmigen Querschnitt auf, wobei der erste Dichtteil 3 an einem sich in Richtung der Wälzkörper 18 erstreckenden Axialvorsprung 19 angeordnet ist, während der zweite Dichtteil 5 mit der innenseitigen Begrenzung des Radialvorsprungs 20 verbunden ist. Der Multipolring 9 ist in einem Bereich des Radialvorsprungs 20 angeordnet, der dem Drehzahlsensor 8 in axialer Richtung benachbart ist.

Der magnetisierte Elastomerwerkstoff des Multipolrings 9 erstreckt sich radial nach außen und umschließt den Axialvorsprung 19 auf der dem abzudichtenden Raum 14 abgewandten Seite vollständig. Der erste Dichtteil 3 umschließt die Stirnseite des Axialvorsprungs 19 und berührt den Nutgrund der Nut 10 unter radialer Vorspannung dichtend. Die statische Abdichtung in diesem Bereich wird dadurch begünstigt, daß der erste Dichtteil 3 aus einem magnetisierten Elastomerwerkstoff besteht, der an dem aus einem metallischen Werkstoff bestehenden Außenring 16 des Wälzlagers 15 eine dadurch verbesserte Haftfestigkeit aufweist. Die radial außenumfangsseitige Ummantelung des Axialvorsprungs 19 ist der Innenumfangsfläche des Außenrings 16 bis auf einen geringen Radialspalt angenähert und schützt daher den ersten Dichtteil 3 vor einer Beaufschlagung mit Verunreinigungen.

Durch die Verwendung eines aus einem magnetisierten Elastomerwerkstoff bestehenden Multipolrings weist der Dichtring 1 nur eine geringes Gewicht auf und dadurch eine vergleichsweise geringe Massenträgheit, so daß die mechanischen Belastungen auf den Dichtring 1 bei Drehzahländerungen des ersten Maschinenteils 4 nur gering sind. Die Herstellung des Dichtrings 1, der als Zweistoff-Dichtring ausgebildet ist, ist einfach und wirtschaftlich günstig. Die Übermittlung der Drehbewegung des ersten Maschinenteils 4 durch den Multipolring 9 des Dichtrings 1 an den Drehzahlsensor 8 ist während einer langen Gebrauchsdauer von gleichbleibend hoher Präzision.

## Patentansprüche

1. Dichtungsanordnung, umfassend einen Dichtring (1) mit einem sich im wesentlichen in radialer Richtung erstreckenden Stützring (2), einem ersten und zweiten Dichtteil (3,5) sowie einem Multipolring (9), wobei der Stützring (2) in radialer Richtung einerseits mit dem ersten Dichtteil (3) verbunden ist, der relativ drehfest, statisch dichtend ein erstes Maschinenteil (4) anliegend berührt und in radialer Richtung andererseits mit dem zweiten Dichtteil (5) verbunden ist, der relativ drehbeweglich, dynamisch abdichtend an ein zweites Maschinenteil (6) angelegt ist, wobei der erste (3) und der zweite Dichtteil (5) jeweils aus einem elastomeren Werkstoff bestehen, wobei der Dichtring (1) zur Erfassung von Drehbewegungen des ersten Maschinenteils (4) um seine Achse (7) zumindest ein Hilfsmittel aufweist, das an einem Drehzahlsensor (8) vorbeibeweglich ist, wobei das Hilfsmittel durch den mit dem ersten Maschinenteil (4) gemeinsam um seine Achse (7) drehbaren Multipolring (9) gebildet ist, der aus einem magnetisierbaren Elastomerwerkstoff besteht und in Umfangsrichtung aufeinanderfolgende, sich in radialer Richtung erstreckende Nord- und Südpole aufweist, wobei der erste Dichtteil (3) in einer in Richtung des zweiten Maschinenteils (6) geöffneten Nut (10) des ersten Maschinenteils (4) dichtend abgestützt ist und wobei das erste Maschinenteil (4) aus einem metallischen Werkstoff besteht, dadurch gekennzeichnet, daß der erste Dichtteil (3) und der Multipolring (9) materialeinheitlich und einstückig ineinander übergehend ausgebildet sind, so daß durch den ersten Dichtteil (3) aus magnetisiertem Elastomerwerkstoff der Haftsitz am ersten Maschinenteil (4) durch eine erhöhte Haftfestigkeit und folglich die statische Abdichtung gegenüber dem ersten Maschinenteil (4) verbessert ist.

2. Dichtungsanordnung nach Anspruch 1, dadurch gekennzeichnet, daß der erste Dichtteil (3), der Multipolring (9) und der zweite Dichtteil (5) mit dem Stützring (2) adhäsiv verbunden sind und daß der Multipolring (9) auf der dem Drehzahlsensor (8) zugewandten Seite des Stützrings (2) angeordnet ist.

3. Dichtungsanordnung nach einem der Ansprüche 1 bis 2, dadurch gekennzeichnet, daß der erste Dichtteil (3) und der Multipolring (9) ohne sprunghafte Querschnittsveränderungen ineinander übergehend ausgebildet sind und eine im wesentlichen übereinstimmende Materialstärke aufweisen.

4. Dichtungsanordnung nach einem der Ansprüche 1 bis 3, dadurch gekennzeichnet, daß der Stützring (2), der erste (4) und der zweite Maschinenteil (6) jeweils aus einem metallischen Werkstoff bestehen.

5. Dichtungsanordnung nach einem der Ansprüche 1 bis 4, dadurch gekennzeichnet, daß der zweite Dichtteil (5) das zweite Maschinenteil (6) mit zumindest zwei Dichtlippen (11, 12) anliegend berührt, daß die Dichtlippen (11, 12) einander mit axialem Abstand benachbart zugeordnet sind und daß der durch die Dichtlippen (11, 12) und das zweite Maschinenteil (6) begrenzte, ringförmige Hohlraum (13) mit einem Sperrfett befüllbar ist.

6. Dichtungsanordnung nach einem der Ansprüche 1 bis 5, dadurch gekennzeichnet, daß der erste Dichtteil (3), der Multipolring (9) und der zweite Dichtteil (5) den Stützring (2) auf der dem abzudichtenden Raum (14) abgewandten Seite vollständig überdecken.

7. Verwendung einer Dichtungsanordnung nach Anspruch 1 bis 6 zur Abdichtung eines Wälzlagers (15) in der Radnabe eines Kraftfahrzeugs und zur Erfassung von Drehbewegungen eines Fahrzeugrads, wobei der Außenring (16) des Wälzlagers (15) das erste Maschinenteil (4) und der Innenring (17) des Wälzlagers (15) das zweite Maschinenteil (6) bilden.

## Claims

1. A sealing arrangement comprising a sealing ring (1) with a support ring (2) extending essentially in a radial direction, a first and second sealing part (3, 5), and a multi-pole ring (9), the support ring (2) being connected radially, on the one hand, to the first sealing part (3), which rests in a relatively rotationally fixed and a statically sealing manner against a first machine part (4), and being connected radially, on the other hand, to the second sealing part (5), which is placed in a relatively rotatable and a dynamically sealing manner against a second machine part (6), the first sealing part (3)and the second sealing part (5)each being composed of an elastomeric material, the sealing ring (1) having at least one means for detecting rotary movements of the first machine part (4) about its axis (7), which means can be moved past a rotational-speed sensor (8), the means being formed by the multi-pole ring (9), which is rotatable about its axis (7) together with the first machine part (4), is composed of a magnetizable elastomer material and has circumferentially successive, radially extending north and south poles, the first sealing part (3) being supported in a sealing manner in a groove (10) in the first machine part (4), the said groove being open in the direction of the second machine part (6), and the first machine part (4) being composed of a metallic material, characterized in that the first sealing part (3) and the multi-pole ring (9) are made from the same material and merge integrally into one another, with the result that adhesion to the first machine part (4) is improved by the first sealing part (3) made of magnetized elastomer material by virtue of increased adhesive strength and, consequently, static sealing relative to the first machine part (4) is improved.

2. A sealing arrangement according to claim 1, characterized in that the first sealing part (3), the multi-pole ring (9) and the second sealing part (5) are connected adhesively to the support ring (2) and in that the multi-pole ring (9) is arranged on that side of the support ring (2) which faces the rotational-speed sensor (8).

3. A sealing arrangement according to either of claims 1 and 2, characterized in that the first sealing part (3) and the multi-pole ring (9) are designed to merge into one another without abrupt changes in cross section and have essentially the same thickness of material.

4. A sealing arrangement according to any of claims 1 to 3, characterized in that the support ring (2), the first machine part (4) and the second machine part (6) are each composed of a metallic material.

5. A sealing arrangement according to any of Claims 1 to 4, characterized in that the second sealing part (5) rests against the second machine part (6) by means of at least two sealing lips (11, 12), in that the sealing lips (11, 12) are arranged adjacent to one another with an axial spacing, and in that the annular cavity (13) bounded by the sealing lips (11, 12) and the second machine part (6) can be filled with a barrier grease.

6. A sealing arrangement according to any of claims 1 to 5, characterized in that the first sealing part (3), the multi-pole ring (9) and the second sealing part (5) completely cover the support ring (2) on the side facing away from the space (14) to be sealed off.

7. Use of a sealing arrangement according to any of claims 1 to 6 to seal off a rolling-contact beaing (15) in the wheel hub of a motor vehicle and to detect rotary movements of a vehicle wheel, the outer race (16) of the rolling-contact bearing (15) forming the first machine part (4) and the inner race (17) of the rolling-contact bearing (15) forming the second machine part (6).

## Revendications

1. Dispositif d'étanchéité comprenant une bague d'étanchéité (1) avec une bague d'appui (2) qui s'étend essentiellement en direction radiale, une première et une seconde pièce d'étanchéité (3, 5), ainsi qu'une bague multipolaire (9), la bague d'appui (2) étant reliée, en direction radiale, d'une part, à la première pièce d'étanchéité (3) qui est adjacente de manière relativement résistante à la torsion et à établir un contact étanche statique, à une première pièce de machine (4), et, en direction radiale d'autre part, à la seconde pièce d'étanchéité (5), qui est posée relativement mobile en rotation et de manière à obtenir une étanchéité dynamique contre une seconde pièce de machine (6), la première et la seconde pièce d'étanchéité (3, 5) étant respectivement un matériau élastomère, la bague d'étanchéité (1) servant à capter les mouvements de rotation de la première pièce de machine (4) autour de son axe (7) présente au moins un auxiliaire qui peut être passé devant un capteur tachymétrique (8), l'auxiliaire étant formé par la bague multipolaire (9) qui peut tourner avec la première pièce de machine (4) autour de son axe (7), bague multipolaire qui est en un matériau élastomère magnétisable et qui présente, dans la direction de la circonférence, successivement des pôles nord et sud qui se succèdent et s'étendent en direction radiale, la première pièce d'étanchéité (3) s'appuyant de manière étanche dans une rainure (10) de la première pièce de machine (4), ouverte en direction de la seconde pièce de machine (6) et la première pièce de machine (4) étant en un matériau métallique, caractérisé en ce que la première pièce d'étanchéité (3) et la bague multipolaire (9) sont en un même matériau et se confondent de manière à ne former qu'une seule pièce, de sorte que l'adhérence sur la première pièce de machine (4) soit améliorée par une meilleure résistance du fait de la première pièce d'étanchéité (3) en matériau élastomère magnétisable, et que, par conséquent, l'étanchéité statique par rapport à la première pièce de machine (4) soit améliorée.

2. Dispositif d'étanchéité selon la revendication 1, caractérisé en ce que la première pièce d'étanchéité (3), la bague multipolaire (9) et la seconde pièce d'étanchéité (5) sont reliées, par adhésion, à la bague d'appui (2) et que la bague multipolaire (9) est disposée sur la face tournée vers le capteur tachymétrique (8) de la bague d'appui (2).

3. Dispositif d'étanchéité selon une des revendications 1 à 2, caractérisé en ce que la première pièce d'étanchéité (3) et la bague multipolaire (9) sont conçues de manière à se confondre l'une avec l'autre sans variation brusque de la section et à présenter une épaisseur de matière essentiellement concordante.

4. Dispositif d'étanchéité selon une des revendications 1 à 3, caractérisé en ce que la bague d'appui (2), la première (4) et la seconde pièce de machine (6) sont respectivement en un matériau métallique.

5. Dispositif d'étanchéité selon une des revendications 1 à 4, caractérisé en ce que la seconde pièce d'étanchéité (5) touche de manière adjacente au moins deux lèvres d'étanchéité (11, 12), en ce que les lèvres d'étanchéité (11, 12) sont disposées, l'une à côté de l'autre, avec une distance axiale entre elles et en ce que le creux (13) annulaire limité par les lèvres d'étanchéité (11, 12) et la seconde pièce de machine (6) peut être rempli par une graisse qui fait barrière.

6. Dispositif d'étanchéité selon une des revendications 1 à 5, caractérisé en ce que la première pièce d'étanchéité (3), la bague multipolaire (9) et la seconde pièce d'étanchéité (5) recouvrent entièrement la bague d'appui (2) sur la face opposée à l'espace (14) à rendre étanche.

7. Utilisation d'un dispositif d'étanchéité selon la revendication 1 à 6 pour rendre étanche un palier à roulement (15) dans le moyeu de roue d'un véhicule automobile et pour capter les mouvements de rotation d'une roue de véhicule, la bague extérieure (16) du palier à roulement (15) formant la première pièce de machine (4) et la bague intérieure (17) du palier à roulement (15) formant la seconde pièce de machine (6).
